## Europäisches Patentamt

## European Patent Office

## Office européen des brevets

(19)

(11) Veröffentlichungsnummer: **0 031 005**
**B1**

(12)

# EUROPÄISCHE PATENTSCHRIFT

(45) Veröffentlichungstag der Patentschrift:
08.08.84

(51) Int. Cl.³: **C 08 F 2/10, C 08 F 251/00**

(21) Anmeldenummer: 80106097.1

(22) Anmeldetag: 08.10.80

(54) Verfahren zur Herstellung wasserlöslicher Polymer-Festprodukte.

(30) Priorität: 19.12.79 DE 2951087

(43) Veröffentlichungstag der Anmeldung:
01.07.81 Patentblatt 81/26

(45) Bekanntmachung des Hinweises auf die Patenterteilung:
08.08.84 Patentblatt 84/32

(84) Benannte Vertragsstaaten:
DE FR GB SE

(56) Entgegenhaltungen:
BE - A - 556 214
FR - A - 1 483 742
US - A - 3 635 857

Die Akte enthält technische Angaben, die nach dem Eingang der Anmeldung eingereicht wurden und die nicht in dieser Patentschrift enthalten sind.

(73) Patentinhaber: Röhm GmbH, Kirschenallee Postfach 4242, D-6100 Darmstadt 1 (DE)

(72) Erfinder: Masanek, Jürgen, Breslauer Strasse 3, D-6102 Pfungstadt (DE)
Erfinder: Pennewiss, Horst, Dr., Meissnerweg 53, D-6100 Da-Neu-Kranichstein (DE)
Erfinder: Plainer, Hermann, Dr., Am Wembach 15, D-6107 Reinheim 1 (DE)

## Beschreibung

Wasserlösliche synthetische Polymere haben in der Technik eine stetig wachsende Bedeutung erlangt. Ihre Anwendungsgebiete umfassen unter anderem die Verwendung als Flockungs-, Dispergier-, Verdickungs-, Wasserbehandlungs- und Schlichtmittel.

Unter chemischen Gesichtspunkten wird häufig eine Einteilung in die Klasse der nicht-ionogenen Polymere (z. B. Polyacrylamide, Polyvinylalkohol, Polyäthylenoxid), die Klasse der ionogenen Polymere (sog. Polyelektrolyte) und der Mischpolymerisate vorgenommen. In der Klasse der ionogenen Polymeren kann wiederum eine Unterscheidung in anionische Polymere (z. B. Salze der Acryl-, Methacryl- und Maleinsäure enthaltenden Polymeren) und kationische Polymere [z. B. quarternäre Ammoniumgruppen enthaltende Makromoleküle, vgl. M. F. Hoover, J. Macrom. Sci. Chem. A 4 (6), 1327.–1417 (1970)] vorgenommen werden.

Die Klasse der Mischpolymerisate enthält anionische und kationische Gruppen. Die wenigsten Handelsprodukte sind reine Homopolymerisate.

Gerade die technisch besonders wichtigen Polyacrylate stellen meist Copolymere dar, die neben dem salzbildenden Monomeren noch weitere, elektrisch neutrale Monomere einpolymerisiert enthalten. Genannt seinen Acrylamid, Acrylnitril, Acrylester von niederen Alkoholen sowie die entsprechenden Methacrylverbindung.

Das besondere Interesse der Technik galt der Entwicklung fester Formen von wasserlöslichen synthetischen Polymeren aus unmittelbar einsichtigen Gründen: Der Transport ist gegenüber dem gelösten Zustand vereinfacht und verbilligt.

Das Lösungsmittel (Wasser) braucht nicht mittransportiert zu werden. Es braucht keine Rücksicht auf klimatische Schwankungen genommen werden.

Beim Gebrauch als Hilfsstoff braucht nicht unnötigerweise Wasser den Ansätzen zugefügt werden. Jede gewünschte Konzentration im Endprodukt kann nach Belieben durch Einwiegen der erforderlichen Menge des Feststoffes eingestellt werden.

Bereits bei der Gewinnung des Polymerisats aus den Lösungen stößt man in der Praxis auf Schwierigkeiten. Auf dem Gebiet der Flockungsmittel ist man teilweise zur Isolierung durch Ausfällung der Polymeren mit Alkoholen oder Aceton im Kneter übergegangen. Ferner kennt man azeotrope Wasserauskreisung mittels inerter organischer Lösungsmittel oder auch direktes Trocknen fein verteilter Lösungen auf der Trockenwalze (US-A-3 714 136).

Auf dem Gebiet der UV-induzierten Polymerisation liegt das Verfahren der DE-A-2 050 988 vor, bei dem eine konzentrierte wäßrige Lösung von Acrylmonomeren (z. B. Acrylamid, Acrylnitril und/oder Acrylsäure bzw. Salze und -ester) mit einem pH von mindestens 8, die einen Photoinitiator enthält in relativ dünner Schicht auf einen wasserabweisenden Träger gegossen oder aufgesprüht und anschließend bestrahlt wird. Als gravierender Nachteil dieses Verfahrens wird in der Zusatzanmeldung DE-A-2 248 715 die große Klebrigkeit der Verfahrensprodukte herausgestellt. Die Zusatzanmeldung, bei der der Zusatz eines (thermischen) Initiators empfohlen wird, zielt auf die Herstellung von Polymerisaten mit niedrigerem Molgewicht ab.

Aus der BE-A-556 214 sind stabile wäßrige Dispersionen bekannt, die durch Emulsionspolymerisation von Acryl- oder Methacrylsäureestern unter Persulfat-Katalyse in Anwesenheit wasserlöslicher Polysaccharide hergestellt werden. Die Verfahrensprodukte sind für alle praktischen Zwecke wasserunlöslich und im Sinne der vorliegenden Aufgabe ungeeignet. Im Gegensatz zum Stand der Technik gelingt nach dem vorliegenden Verfahren die Herstellung wasserlöslicher mahlbarer Polymerfestprodukte durch Polymerisation in konzentrierter wäßriger Lösung. Hervorzuheben ist der erfindungsgemäß erreichbare Feststoffgehalt von über 83 Gew. -%.

Unvermindert dringlich stellt sich somit die Forderung nach mahlbaren, wasserlöslichen, synthetischen Polymeren. Der Erfüllung dieser Forderung war man beispielsweise bei den anionischen Polyelektrolyten noch nicht wesentlich näher gekommen. Die Problematik sei am Beispiel der Herstellung von festen, direkt mahlbaren, wasserlöslichen Polymeren in Schicht unter Verwendung von UV-Initiatoren genauer dargestellt. Im Prinzip ist die Polymerisation mit hohen Monomerkonzentrationen anzustreben. Dabei besteht durchwegs die Gefahr einer unerwünscht hohen Vernetzung. In ganz besonderem Maße gilt dies bei Mitverwendung von Acrylamid als Copolymeren. Im Falle der UV-induzierten Copolymerisation von Acrylsäure mit Acrylamid ist zwar ein Trockengehalt des Polymeren von >83% bei erhöhter Temperatur erreichbar und man erhält auch ohne speziellen Trocknungsschritt ein direkt mahlbares Polymer, aber dieses ist nicht mehr glatt wasserlöslich. Die Ursache der Löslichkeitsprobleme dürfte in einem zu hohen Molekulargewicht liegen, wahrscheinlich hervorgerufen durch zusätzliche Übertragungspfropfung. Dazu kommt, daß bei der Polymerisation in hochkonzentrierter Lösung der Restmomomerengehalt in der Regel sehr hoch ausfällt. Um die genannten Nachteile zu umgehen, müßte demnach bei niedrigerer Monomerkonzentration polymerisiert werden. Geht man aber entsprechend vor, so erhält man als Polymerisationsprodukt ein weiches bis zäh-elastisches Gel.

Es wurde nun gefunden, daß bei Raumtemperatur feste wasserlösliche, synthetische Polymer-Festprodukte durch Polymerisation von wasserlöslichen Monomeren oder Mischungen von Monomeren, die zumindest 90 Gew.-% wasserlöslich sind, in wäßrigem Medium erhalten werden können, die die Anforderungen der Technik sehr weitgehend erfüllen, wenn man dem Polymerisationsansatz 0,5 bis 50 Gew.-Teile, (bezogen auf die eingesetzten Monomere), an wasserlöslichen Mono- oder/und Oligosacchariden zusetzt und die Polymerisation in an sich bekannter Weise radikalisch in homogener wäßriger Phase durchführt. Als Richtwert soll gelte, daß bei dem erfindungsgemäßen Verfahren den Reaktionsansätzen soviel Mono- oder/und Oligosaccharid zugesetzt wird, daß der Feststoffgehalt 80%, speziell 83%, überschreitet.

Die Polymerisationsverfahren gemäß der vorliegenden Erfindung können im übrigen in enger Anlehnung an die Verfahren des Standes der Technik durchgeführt werden. So können sowohl die gewöhnlich zur Herstellung nichtionogener Polymere verwendeten Monomere als auch die zur Herstellung anionischer oder kationischer Polymerisate oder zur Herstellung von Mischpolymerisaten verwendeten Monomeren jeweils in Anlehnung an die bekannten Polymerisationsverfahren erfindungsgemäß zu wasserlöslichen synthetischen Polymerfestprodukten polymerisiert werden.

Besonders hervorgehoben sei die im allgemeinen vorhandene erstklassige Mahlbarkeit der erfindungsgemäß hergestellten Polymerisate.

Vorteilhaft für die Einstellung des gewünschten Ergebnisses ist es, wenn im Moment der Polymerisation eine homogene Lösung aller Komponenten vorliegt. Die im Zuge des erfindungsgemäßen Verfahrens hergestellte homogene Schicht ist transparent und ermöglicht daher auch eine Polymerisation mit UV-Licht.

Das zugesetzte Mono- und/oder Oligosaccharid erfüllt offenbar mehrere Funktionen im Polymerisationsansatz. Anzunehmen ist, daß es nicht nur als inerter Füllstoff wirkt, der dem Produkt die erwünschte Härte verleiht, sondern daß es auch noch die Funktion eines (schwachen) Reglers übernimmt, der die Vernetzungstendenz vor allem im Endstadium der Polymerisation hintanhält. So werden bei hohem Kohlehydratzusatz sogar relativ niedrige Molekulargewichte erzielt. Werden jedoch — wie im Normalfall — hohe Molekulargewichte angestrebt, so soll der Kohlehydratgehalt 20% des Gesamtansatzes nicht übersteigen.

Beim Vorgehen nach dem erfindungsgemäßen Verfahren gelingt es den Polymerisationsprodukten zwei bisher schwer- bis unvereinbare Eigenschaften zu erteilen, nämlich Vernetzungsfreiheit und Mahlbarkeit. Als Beispiel sei besonders auf die Copolymerisation von Acrylamid mit anderen Monomeren, insbesondere Acrylsäure, verwiesen.

Das erfindungsgemäße Verfahren kann im Hinblick auf die Polymerisation von nicht-ionogenen Monomeren beispielsweise bei der UV-Polymerisation konzentrierter Acrylamid-Lösungen, wie in DE-A-2 545 290 beschrieben, angewandt werden.

Die anionischen Polymerisate leiten sich vor allem von radikalisch polymerisierbaren Carbonsäuren, Anhydriden oder anderen Säure-Vorstufen ab. Als Monomere kommen daher $\alpha,\beta$-ungesättigte Carbonsäuren infrage. Genannte seien z. B. Maleinsäure, Fumarsäure, Itakonsäure, Crotonsäure und bevorzugt Acrylsäure und Methacrylsäure. Die Verbindungen können als solche oder in Form ihrer Salze eingesetzt werden. Als Salze kommen z. B. Alkalisalze oder Ammoniumsalze infrage. Weiter ist auch Copolymerisation mit anderen anionischen Monomeren, wie Vinylsulfonsäure und ihren Salzen, Styrolsulfonaten möglich. Gleichzeitig können als weitere Comonomere nicht-ionisierte, neutrale, wasserlösliche Monomere, wie Acrylamid oder Methacrylamid, Acrylintril, Vinylverbindungen heterocyclischer polymerisationsfähiger Monomerer, wie z. B. Vinylpyridin, Vinylpyrrolidin, Vinylpyrrolidon, Vinylimidazol eingesetzt werden. Ferner können in einem solchen Maße, daß die Wasserlöslichkeit nicht negativ beeinflußt wird, auch weniger hydrophile Monomere, wie Ester der Acryl- bzw. Methacrylsäure copolymerisiert werden.

Weiter seien als Monomeren genannt die Hydroxyalkylester und die Aminoalkylester der Acryl- und der Methacrylsäure sowie deren Aminoalkylamide. Dabei kann es sich um Derivate primärer, sekundärer, tertiärer oder quartärer Amine handeln. Beispiele für Monomere der genannten Art sind das 2-Hydroxyäthylacrylat oder -methacrylat, 2-Hydroxyproplyacrylat oder Methacrylat, 4-Hydroxybutylacrylat oder -methacrylat, Dimethylaminoäthylacrylat oder -methacrylat, sowie Piperidiono-, Morpholino- oder Piperazinoalkylacrylate oder -methacrylate. Die Aminoalkylacrylate bzw. -methacrylate in Form ihrer Salze sind als kationische Monomere anzusprechen. Repräsentativ für die kationischen Monomeren sind ferner z. B. Monomere mit quarternären Ammoniumverbindungen, insbesondere die Quaternierungsprodukte der Dialkylaminoalkylester der Acryl- oder Methacrylsäure. Genannt seien das N,N-Dimethylaminoäthylacrylat oder -methacrylat, N,N-Diäthylaminoäthylacrylat oder -methacrylat und deren Quarternierungsprodukte.

Daneben können, wie bereits oben ausgeführt, auch nicht eigentlich wasserlösliche Monomere in einem solchen Umfang copolymerisiert werden, daß sie die Wasserlöslichkeit des polymeren Produkts nicht beeinträchtigen.

Der Anteil der nicht-wasserlöslichen Monomeren wird sich daher in der Regel unter 10 Gew.-%, bezogen auf die gesamten eingesetzten Monomeren, halten. Bei der Durchführung des Verfahrens unter Verwendung anionischer Monomere wird die Polymerisation vorteilhaft bei pH-Werten von 5—14, vorzugsweise 6—8, durchgeführt. Der besonders bevorzugte Bereich wird praktisch erstmalig durch die erfindungsgemäße Anwendung von Mono- bzw. Oligosacchariden und/oder Derivaten zugänglich. Bei Anwendung des Verfahrens mit kationischen Monomeren kann man die Polymerisation vorteilhaft bei einem pH-Wert unterhalb 8, vorzugsweise bei pH 3—6, vornehmen. Auch die Herstellung von Mischpolymerisaten, die sowohl anionische als kationische Monomere enthalten, liegt innerhalb der vorliegenden Erfindung. Dabei ist bei der Vorgabe des pH-Werts zweckmäßig dafür Sorge zu tragen, daß genügend weit außerhalb des isoelektrischen Punktes der vorhandenen Elektrolyte gearbeitet wird.

Unter den erfindungsgemäß zu verwendenden Mono- und/oder Oligosacchariden seien im Einklang mit der üblichen Nomenklatur die Zuckereinheiten, wie Glucose, Fructose, Sorbose, Galactose, Mannose, Xylose verstanden sowie die durch glykosidische Verknüpfung aufgebauten Saccharide mit 2 bis 20 Monosaccharideinheiten, insbesondere die Di- bis Tetra-Saccharide. Es können sowohl gleiche als verschiedene Zuckereinheiten im Molekül vorhanden sein. An Disacchariden seien beispielsweise die Saccharose (Sucrose), Lactose, Maltose, Cellobiose, Melibiose, an Trisacchariden die Raffinose, Mellecitose, Gentianose, an Tetrasacchariden die Stachyose genannt. Ferner kommen die unter dem Einfluß von Säure oder Enzymen hergestellten Abbauprodukte polymerer Kohlehydrate, soweit sie in die Definitionen der Mono- bzw. Oligosaccharide fallen, infrage. Genannt seien z. B. die aus Stärke durch Amylaseeinwirkungen gewonnenen Oligoglucoside sowie Abbauprodukte der Cellulose, des Xylans, soweit sie den Definitionen entsprechen. Daneben sollen aber auch wasserlösliche Zuckerderivate, bei denen funktionelle Gruppen der Zuckereinheiten verändert wurden, z. B. die Oxidations- und Reduktionsprodukte derselben sowie Ester und/oder Äther vom Anspruch umfaßt sein. So sind z. B. Zuckeralkohole, wie Sorbit oder Monomethyläther wie Glucosemonomethyläther im Sinne der vorliegenden Erfindung anwendbar.

Im Journal of Applied Polymer Science Vol 22, 3327 (1978) wird über die Fähigkeit zuvor mit UV-Licht bestrahlter Saccharide berichtet, die Homopolymerisation von Acrylamid in wäßrigem Medium auszulösen. Die Autoren fanden auch, daß bezüglich der Polymerisation der Acrylsäure, des N-Vinyl-2-pryrrolidons, Acrylnitrils und Methylmethacrylats die zuvor bestrahlte Sucrose nahezu inaktiv war.

Die Polymerisation kann in an sich bekannter Weise beispielsweise gemäß BE-A-695 342 in Folienbeuteln, gemäß DE-D-1 770 588 in offenen Wannen, gemäß DE-A-2 545 290 auf einem endlosen Band durchgeführt werden. Die (radikalische) Polymerisation kann unter Verwendung der üblichen Beschleuniger wie Peroxide oder Azo-Verbindungen oder auch durch Bestrahlung (UV, γ-Strahlung) ausgelöst und gesteuert werden: (Vgl. H. Rauch-Puntigam, T. Völker, Acryl- und Methacrylverbindungen, Springer-Verlag, 1967). Dabei können auch die üblichen Hilfsstoffe, wie z. B. Regler, beispielsweise Schwefelregler, soweit zweckdienlich, mitverwendet werden. Bei der Bewältigung der auftretenden technischen Probleme, wie Wärmeabfuhr, können ebenfalls die Problemlösungen des Standes der Technik nutzbringend angewendet werden. Es ist nicht in allen Fällen notwendig, gleich direkt mahlbare Produkte herzustellen. Der erfindungsgemäße Zusatz von Mono- und/oder Oligosacchariden ermöglicht in jedem Fall ein Anheben des Trockengewichts, so daß nur kurzfristig nachgetrocknet werden muß, um in den Bereich der Mahlbarkeit (>83% Trockengehalt) zu gelangen.

Es wurde weiter gefunden, daß überraschenderweise bei Anwesenheit der erfindungsgemäßen Mono- und/oder Oligosaccharide bzw. Derivate, die normalerweise sonst zu beobachtende Übertragungspfropfung auf anwesende Polymere nicht oder nur in untergeordnetem Maße stattfindet, so daß z. B. die Durchführung der Reaktion in Anwesenheit von löslicher Stärke (einem bekanntlich besonders pfropfaktiven Polymeren) neben niedermolekularen Stärkeabbauprodukten, gemäß der Kennzeichnung der vorliegenden Erfindung, möglich wird.

Ein weiterer Vorteil in diesem Zusammenhang liegt darin, daß in Gegenwart der erfindungsgemäß einzusetzenden Mono- bzw. Oligosaccharide beim Trocknen keine ins. Gewicht fallende Qualitätsminderung des Produkts, etwa durch nachträgliche Vernetzung, beobachtet wird. Außerdem ist die Lösungsgeschwindigkeit eines saccharidhaltigen Polymeren im Wasser deutlich erhöht.

Die nachfolgenden Beispiele dienen zur Erläuterung der Erfindung, sollen aber den nachgesuchten Schutz nicht auf diese Ausführungsart beschränken.

Beispiel 1

Polymerisation unter Verwendung von Mono- bzw. Oligosacchariden. Aus

| | | |
|---|---|---|
| 70,0 g | Acrylsäureamid | |
| 19,5 g | Acrylsäure | |
| 15,0 g | Saccharose | |
| 5,0 g | H₂O | |
| 30,6 g | 50%ige KOH | |
| 0,2 g | Pentaerythrit-tetrathioglycolat | |
| 0,01 g | Benzoinäthyläther | |
| 0,1 g | Titriplex®, Chelatbildner für die Komplexometrie | |

wird bei 50° C eine homogene Lösung hergestellt (pH = 10,5). Diese wird als 1 cm dicke Schicht in einer Aluminiumblechwanne aus 18,5 cm mit UV-Licht, (20 W-Pauslampe) bestrahlt und bei 60° C isotherm (Lampe schaltet ab, wenn Temperaturfühler anzeigt, daß 60° C überschritten sind), polymerisiert. Das so erhaltene Produkt ist hart und spröde, daher direkt mahlbar (Trockengehalt 85,2%, Wirksubstanz 74,1%). Die 1%ige Lösung hat eine Viskosität von 5000 mPa · s; sie ist homogen und eignet sich z. B. sehr gut als Flokkungsmittel für Kaolin.

Mit ähnlich gutem Erfolg kann auch Cellobiose, Methyl-α-D-glucopyranosid oder Stärkeabbauprodukte mit DE-Werten von 5—50 als Kohlehydratzusatz verwendet werden.

Beispiel 2

Polymerisation ohne Verwendung von Mono- bzw. Oligosacchariden. Aus

| 70,0 g | Acrylsäureamid |
| 19,5 g | Acrylsäure |
| 5,0 g | Wasser |
| 30,6 g | 50%ige KOH |
| 0,2 g | Pentaerythrit-tetrathioglycolat |
| 0,01 g | Benzoinäthyläther |
| 0,1 g | Titriplex® |

wird bei 50° C eine homogene Lösung hergestellt (pH = 10,3) und analog Beispiel 1 polymerisiert. Nach Abschluß der Polymerisation erhält man ein zähelastisches Gel (Trockengehalt bzw. Wirksubstanz 79,8%), das nicht direkt mahlbar ist. Eine 1%ige Lösung ist vernetzt. Sie hat eine Viskosität von 6400 mPa · s. Als Flockungsmittel ist das Produkt unbrauchbar.

**Patentansprüche**

1. Verfahren zur Herstellung von wasserlöslichen, synthetischen Polymer-Festprodukten durch Polymerisation von Monomeren in wäßrigem Medium, dadurch gekennzeichnet, daß die eingesetzten Monomeren wasserlöslich sind oder falls nicht-wasserlösliche Monomere copolymerisiert werden, ihr Anteil 10 Gew.-% nicht überschreitet und daß die Polymerisationsreaktion als radikalische Polymerisation in homogener wäßriger Phase durchgeführt wird, die 0,5— 50 Gew.-Teile an wasserlöslichen Mono- und/ oder Oligosacchariden, bezogen auf die eingesetzten Monomeren, enthält, mit der Maßgabe, das der Feststoffgehalt im Polymerisationsansatz 80% überschreitet.

2. Verfahren gemäß Anspruch 1, dadurch gekennzeichnet, daß der Feststoffgehalt im Polymerisationsansatz 83% überschreitet.

3. Verfahren gemäß Anspruch 1, dadurch gekennzeichnet, daß als Monomere ausschließlich oder überwiegend hydrophile Acrylat- und/oder Methacrylatmonomere verwendet werden.

4. Verfahren gemäß den Ansprüchen 1 bis 3, dadurch gekennzeichnet, daß als Monomere mindestens teilweise anionische Monomere verwendet werden.

5. Verfahren gemäß Anspruch 4, dadurch gekennzeichnet, daß als Monomere Acrylamid und/oder Methacrylamid zusammen mit Acrylsäure und/oder Methacrylsäure verwendet werden.

6. Verfahren gemäß den Ansprüchen 4 und 5, dadurch gekennzeichnet, daß die Polymerisation bei einem pH-Wert von 5—14, vorzugsweise 6—8, durchgeführt wird.

7. Verfahren gemäß den Ansprüchen 1 bis 3, dadurch gekennzeichnet, daß als Monomere mindestens teilweise kationische Monomere verwendet werden.

8. Verfahren gemäß Anspruch 7, dadurch gekennzeichnet, daß als Monomere Ester oder Amide der Methacrylsäure und/oder der Acrylsäure verwendet werden, die eine tertiäre Aminogruppe oder quartäre Ammoniumgruppe, vorzugsweise Dialkylaminoalkylester- bzw. -amidgruppe bzw. eine quartäre Ammoniumgruppe derselben, tragen.

9. Verfahren gemäß den Ansprüchen 7 und 8, dadurch gekennzeichnet, daß die Polymerisation bei einem pH-Wert unter 8, vorzugsweise 3—6, durchgeführt wird.

10. Verfahren gemäß den Ansprüchen 1 bis 9, dadurch gekennzeichnet, daß der Kohlehydratgehalt 20% des gesamten Polymerisationsansatzes nicht überschreitet.

11. Verfahren gemäß den Ansprüchen 1 bis 10, dadurch gekennzeichnet, daß die Polymerisationslösung neben den Mono- und/oder Oligosacchariden an sich pfropfaktive Polymere enthält.

12. Verfahren gemäß Anspruch 11, dadurch gekennzeichnet, daß als pfropfaktives Polymeres lösliche Stärke in der Polymerisationslösung enthalten ist.

13. Verfahren gemäß den Ansprüchen 1 bis 12, dadurch gekennzeichnet, daß Acrylamid als Monomeres verwendet wird.

14. Mahlbares, wasserlösliches, synthetisches Polymer-Festprodukt, hergestellt nach dem Verfahren gemäß den Ansprüchen 1 bis 13.

**Claims**

1. Process for the preparation of water-soluble synthetic solid polymer products by polymerisation of monomers in an aqueous medium, characterised in that monomers used are water-soluble or, if non-water-soluble monomers are included in the polymerisation, the proportion thereof does not exceed 10% by weight and in that the polymerisation reaction is carried out as radical polymerisation in a homogeneous aqueous phase which contains 0,5—50 parts by weight of water-soluble mono- and/or oligosaccharides, based on the monomers used, with the proviso that the solids content of the polymerisation mixture exceeds 80%.

2. Process as claimed in claim 1, caracterised in that the solids content of the polymerisation mixture exceeds 83%.

3. Process as claimed in claim 1, characterised in that exclusively or predominantly hydrophilic acrylate and/or methacrylate monomers are used as the monomers.

4. Process as claimed in claims 1 to 3, characterised in that at least partly anionic monomers are used as the monomers.

5. Process as claimed in claim 4, characterised in that acrylamide and/or methacrylamide together with acrylic acid and/or methacrylic acid are used as the monomers.

6. Process as claimed in claims 4 and 5, characterised in that the polymerisation is carried out at a pH of 5—14, preferably 6—8.

7. Process as claimed in claims 1 to 3, characterised in that at least partly cationic monomers are used as the monomers.

8. Process as claimed in claim 7, characterised in that esters or amides of methacrylic acid and/or of acrylic acid which carry a tertiary amino group or quaternary ammonium group, preferably a dialkylaminoalkyl ester or amide group or a quaternary ammonium group thereof, are used as the monomers.

9. Process as claimed in claims 7 and 8, characterised in that the polymerisation is carried out at a pH of less than 8, preferably 3—6.

10. Process as claimed in claims 1 to 9, characterised in that the carbohydrate content does not exceed 20% of the total polymerisation mixture.

11. Process as claimed in claims 1 to 10, characterised in that the polymerisation solution contains, in addition to the mono- and/or oligosaccharides, inherently graft-active polymers.

12. Process as claimed in claim 11, characterised in that soluble starch is contained as a graftactive polymer in the polymerisation solution.

13. Process as claimed in claims 1 to 12, characterised in that acrylamide is used as the monomer.

14. Grindable, water-soluble, synthetic solid polymer product prepared by the process as claimed in claims 1 to 13.

**Revendications**

1. Procédé de préparation de produits solides polymère synthétiques solubles dans l'eau par polymérisation de monomères en milieu aqueux, caractérisé en ce que les monomères mis en oeuvre sont solubles dans l'eau ou bien, si l'on copolymérise des monomères non solubles dans l'eau, leur proportion ne dépasse pas 10% en poids, et en ce que la réaction de polymérisation est effectuée sous forme de polymérisation radicalaire en phase aqueuse homogène contenant 0,5 à 50 parties en poids de mono- et/ou oligo-saccharides solubles dans l'eau, par rapprot aux monomères mis en oeuvre, étant spécifié que le teneur en matières solides du mélange de polymérisation dépasse 80%.

2. Procédé selon la revendication 1, caractérisé en ce que la teneur en matières solides du mélange de polymérisation dépasse 83%.

3. Procédé selon la revendication 1, caractérisé en ce que l'on utilise en tant que monomères, exclusivement ou en proportion prépondérante, des monomères acryliques et/ou méthacryliques hydrophiles.

4. Procédé selon les revendications 1 à 3, caractérisé en ce que l'on utilise en tant que monomères, en partie au moins, des monomères anioniques.

5. Procédé selon la revendication 4, caractérisé en ce que l'on utilise en tant que monomères l'acrylamide et/ou le méthacrylamide accompagné de l-acide acrylique et/ou de l'acide méthacrylique.

6. Procédé selon les revendications 4 et 5, caractérisé en ce que la polymérisation est effectuée à un pH de 5 à 14, de préférence de 6 à 8.

7. Procédé selon les revendications 1 à 3, caractérisé en ce que l'on utilise en tant que monomères, en partie au moins, des monomères cationiques.

8. Procédé selon la revendication 7, caractérisé en ce que l'on utilise en tant que monomères des esters ou amides de l'acide méthacrylique et/ou de l'acide acrylique portant un groupement amino tertiaire ou un groupement ammonium quaternaire, de préférence des groupements ester ou amide dialkylaminoalkalique ou un groupement ammonium quaternaire.

9. Procédé selon les revendications 7 et 8, caractérisé en ce que la polymérisation est effectuée à un pH inférieur à 8, et de préférence de 3 à 6.

10. Procédé selon les revendications 1 à 9, caractérisé en ce que la teneur en saccharide ne dépasse pas 20% du mélange de polymérisation total.

11. Procédé selon les revendications 1 à 10, caractérisé en ce que la solution de polymérisation contient, avec les mono- et/ou oligo-saccharides, des polymères actifs par nature dans le greffage.

12. Procédé selon la revendication 11, caractérisé en ce que le polymère actif dans le greffage contenu dans la solution de polymérisation est un amidon soluble.

13. Procédé selon les revendications 1 à 12, caractérisé en ce que l'on utilise en tant que monomère l'acrylamide.

14. Produit solide polymère synthétique soluble dans l'eau et broyable, préparé par le procédé selon les revendications 1 à 13.